(19) Europäisches Patentamt
European Patent Office
Office européen des brevets

(11) **EP 4 454 800 A1**

(12) **EUROPEAN PATENT APPLICATION**
published in accordance with Art. 153(4) EPC

(43) Date of publication:
**30.10.2024 Bulletin 2024/44**

(21) Application number: **22911910.2**

(22) Date of filing: **21.12.2022**

(51) International Patent Classification (IPC):
**B23K 9/16** (2006.01)    **B23K 9/18** (2006.01)
**B23K 11/00** (2006.01)    **B23K 35/30** (2006.01)
**B23K 101/04** (2006.01)

(52) Cooperative Patent Classification (CPC):
**B23K 9/16; B23K 9/18; B23K 11/00; B23K 35/30**

(86) International application number:
**PCT/KR2022/020919**

(87) International publication number:
**WO 2023/121277 (29.06.2023 Gazette 2023/26)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **21.12.2021 KR 20210184251**

(71) Applicant: **POSCO Co., Ltd
Pohang-si, Gyeongsangbuk-do 37859 (KR)**

(72) Inventor: **LEE, Sang-Chul
Pohang-si, Gyeongsangbuk-do 37877 (KR)**

(74) Representative: **Meissner Bolte Partnerschaft
mbB
Patentanwälte Rechtsanwälte
Postfach 86 06 24
81633 München (DE)**

(54) **WELDED STEEL PIPE FOR SLURRY TRANSPORTING AND MANUFACTURING METHOD FOR SAME**

(57)    An aspect of the present invention may provide a welded steel pipe which is suitable to deliver a slurry, and a method for manufacturing same.

FIG. 2

EP 4 454 800 A1

**Description**

Technical Field

The present disclosure relates to a welded steel pipe and a method for manufacturing the same, and more specifically, a welded steel pipe having superior wear resistance and low-temperature toughness by optimizing a steel composition and a microstructure in materials of the steel pipe, and suitable for delivering a slurry by minimizing occurrence of high-temperature cracks in a welded portion, and a method for manufacturing the same.

Background Art

Components and structures used under the wear-resistant environment require regular inspection and replacement to ensure work safety, work soundness, etc. In order to inspect and replace such components and structures, an operation of an industrial facility should temporarily stop, so frequent inspection and replacement of components and structures leads to lower productivity and economic feasibility. Therefore, various attempts have been made to extend the lifespans of components and structures used in wear-resistant environments, and various studies are being actively conducted to improve the wear resistance of a material itself constituting the components and the structures.

As the mining, oil, and gas industries grow, wear of welded steel pipes used in mining, transportation, refining, and storage processes has emerged as a major problem. On the other hand, although development of oil sands has recently begun in earnest, it may be known that welded steel pipes formed of API-standard steel materials commonly used in the oil and gas industries do not secure a level of wear resistance that may deliver a slurry containing oil, rock, gravel, and sand for a long time. In addition, welded steel pipes used for delivering a slurry are required to have excellent low-temperature toughness, but it is known that currently commonly used API-standard steel materials do not secure low-temperature toughness that meets this requirement. Therefore, there is an urgent need for research into welded steel pipes for slurry pipes with superior wear resistance and low-temperature toughness.

Summary of Invention

Technical Problem

An aspect of the present disclosure is to provide a welded steel pipe having superior wear resistance and low-temperature toughness, and suitable for delivering a slurry by minimizing occurrence of high-temperature cracks in a welded portion, and a method for manufacturing the same.

An object of the present disclosure is not limited to the above. Those skilled in the art will have no difficulty in understanding additional problems of the present disclosure from the overall contents of the present specification.

Solution to Problem

A method for manufacturing a welded steel pipe for delivering a slurry, according to an aspect of the present disclosure, includes molding an austenite-based steel sheet to have a tubular shape, to form a butted portion; and welding the butted portion to provide the welded steel pipe such that a carbon amount of a deposited portion satisfies the following relational expression 1:

[Relational expression 1]

$$0.03*[Mn] + 0.04*[Cr] \leq [C] \leq 0.05*[Mn] + 0.26*[Cr]$$

where, [C], [Mn], and [Cr] are amounts (% by weight) of C, Mn, and Cr, included in the deposited portion, respectively.

The austenite-based steel sheet may include, by weight, C: 0.4 to 1.2%, Si: 1.0% or less (including 0%), Mn: 10 to 28%, Cr: 6.0% or less (including 0%), V: 0.5% or less (including 0%), P: 0.025% or less, S: 0.025% or less, a balance of Fe, and inevitable impurities, wherein surface hardness of the austenite-based steel sheet satisfies the following relational expression 2:

18.7*[Mn] - 10.3*[Cr] + 1.7*[C] ≤ Surface Hardness (Hv) ≤ 22.1*[Mn] + 18.3*[Cr] + 2.4*[C]                    [Relational expression 2]

where, [Mn], [Cr], and [C] are amounts (% by weight) of Mn, Cr, and C, included in the steel sheet, respectively, and, when a component thereamong is not included, brackets including the component are substituted with zero (0).

The austenite-based steel sheet may include austenite having 80% by area or more as a microstructure, and wherein an average grain size of the austenite may be 60 um or less.

The austenite-based steel sheet may include a twin of 20% by area or less, and wherein an average size of the twin may be 400 nm or less.

The molding an austenite-based steel sheet may be performed by one selected from a spiral molding process, a UOE press process, a roll bending process, and a JCO molding process.

The welding the butted portion may be performed by at least one arc welding process selected from a shield metal arc welding (SMAW) process, a gas metal arc welding (GMAW) process, a gas tungsten arc welding (GTAW) process, a flux cored arc welding (FCAW) process, and a sub-merged arc welding (SAW) process, or an electric resistance welding (ERW) process. The butted portion may be welded with a heat input amount of 4.3kJ/mm or less.

A welded steel pipe for delivering a slurry, according to an aspect of the present disclosure, includes a welded steel pipe base material portion in which austenite is a base structure; and a welded portion connecting both ends of the welded steel pipe base material portion to each other, wherein a carbon amount of a deposited portion included in the welded portion satisfies the following relational expression 1:

```
[Relational expression 1]

0.03*[Mn] + 0.04*[Cr] ≤ [C] ≤ 0.05*[Mn] + 0.26*[Cr]
```

where, [C], [Mn], and [Cr] are amounts (% by weight) of C, Mn, and Cr, included in the deposited portion, respectively.

The welded steel pipe base material portion may include, by weight, C: 0.4 to 1.2%, Si: 1.0% or less (including 0%), Mn: 10 to 28%, Cr: 6.0% or less (including 0%), V: 0.5% or less (including 0%), P: 0.025% or less, S: 0.025% or less, a balance of Fe, and inevitable impurities, wherein surface hardness of the steel sheet satisfies the following relational expression 2:

$$18.7*[Mn] - 10.3*[Cr] + 1.7*[C] \leq \text{Surface Hardness (Hv)} \leq 22.1*[Mn] + 18.3*[Cr] + 2.4*[C] \qquad \text{[Relational expression 2]}$$

where, [Mn], [Cr], and [C] are amounts (% by weight) of Mn, Cr, and C, included in the steel sheet, respectively, and, when a component thereamong is not included, brackets including the component are substituted with zero (0).

The welded steel pipe base material portion may include austenite having 80% by area or more as a microstructure, and wherein an average grain size of the austenite may be 60 um or less.

The welded steel pipe base material portion may include a twin of 20% by area or less, and wherein an average size of the twin may be 400 nm or less.

A maximum crack length of a high-temperature crack, formed in the welded portion, may be 0.5 mm or less.

In the welded steel pipe base material portion, a tensile strength may be 800 MPa or more, and a temperature at which a shear area of a DWTT test is 85% or more may be -25°C or less.

Means for solving the above problems does not list all features of the present disclosure, and various features of the present disclosure and advantages and effects thereof will be understood in more detail with reference to specific embodiments and embodiments below.

Advantageous Effects of Invention

According to an aspect of the present disclosure, a welded steel pipe having superior wear resistance and low-temperature toughness, and suitable for delivering a slurry by minimizing occurrence of high-temperature cracks in a welded portion, and a method for manufacturing the same, may be provided.

Effects of the present disclosure are not limited to the above, and may be construed as including matters reasonably inferred from matters described by those skilled in the art.

Brief Description of Drawings

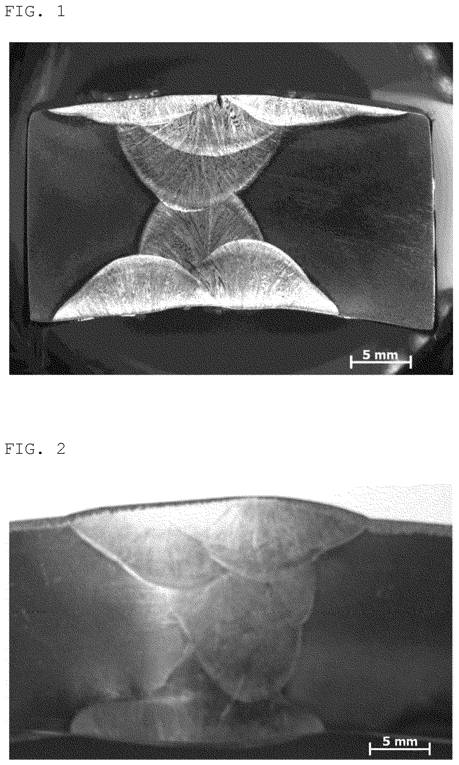

FIG. 1 is a cross-sectional observation photograph of a welded portion of a test piece 1, and FIG. 2 is a cross-sectional observation photograph of a welded portion of a test piece 2.

Best Mode for Invention

The present disclosure relates to a welded steel pipe for delivering a slurry, and a method for manufacturing the same, and hereinafter, preferred embodiments of the present disclosure will be described. Embodiments of the present disclosure may be modified in various forms, and the scope of the present disclosure should not be construed as being limited to embodiments described below. The present embodiments may be provided to describe the present disclosure in more detail to those skilled in the art to which the present disclosure pertains.

Hereinafter, an austenite-based steel sheet used for manufacturing a welded steel pipe of the present disclosure will be described in more detail. Hereinafter, unless specifically described, % described in relation to an amount of a steel composition is based on a weight, and % described in relation to a fraction of a microstructure is based on an area.

An austenite-based steel sheet according to an aspect of the present disclosure may include, by weight, C: 0.4 to 1.2%, Si: 1.0% or less (including 0%), Mn: 10 to 28%, Cr: 6.0% or less (including 0%), V: 0.5% or less (including 0%), P: 0.025% or less, S: 0.025% or less, a balance of Fe, and inevitable impurities.

Carbon (C): 0.4 to 1.2%

Carbon (C) may be a component that effectively contributes to securing strength of steel and improving wear resistance of the steel. In addition, carbon (C) may be a component that improves curing ability of the steel, and effectively contributes to stabilization of austenite. In the present disclosure, to improve strength and austenite stability of a welded joint portion as well as a base material of a welded steel pipe, an amount of carbon (C) included in an austenite-based steel sheet is limited to a range of 0.4% or more. More preferably, the amount of carbon (C) is 0.5% or more, and more preferably, the amount of carbon (C) is 0.6% or more. When carbon (C) is excessively added, a large amount of carbides may be precipitated, and thus wear resistance and elongation of the steel may decrease, and thus, the present disclosure may limit an upper limit of the amount of carbon (C) to 1.2%.

Silicon (Si): 1.0% or less (including 0%)

Silicon (Si) may be a component that not only acts as a deoxidizing agent but also effectively contributes to improving strength of steel by solid solution enhancement. Therefore, an austenite-based steel sheet of the present disclosure may include silicon (Si) to achieve the above effects. A preferred lower limit of an amount of silicon (Si) is 0.1%, and a more preferred lower limit of the amount of silicon (Si) is 0.2%. However, since silicon (Si) may be a component that adversely affects high temperature formability and low temperature formability, the present disclosure may limit an upper limit of the amount of silicon (Si) to 1.0%. A preferred upper limit of the amount of silicon (Si) is 0.9%, and a more preferred upper limit of the amount of silicon (Si) is 0.8%.

Manganese (Mn): 10 to 28%

Manganese (Mn) may be a component that effectively contributes to stabilization of austenite, and may effectively improve strength, impact toughness, and wear resistance while increasing a processing hardening degree of steel. In addition, manganese (Mn) may be a component that effectively contributes to the non-magnetic maintenance after processing the steel, and may be also a component capable of effective desulfurization because sulfur (S) in the steel combines to form MnS. An austenite-based steel sheet of the present disclosure may include 10% or more of manganese (Mn) to achieve the above effects. A preferred lower limit of an amount of manganese (Mn) is 12%. When manganese (Mn) is excessively added, an increase in manufacturing costs is inevitable and corrosion resistance of the steel may be deteriorated. Therefore, the present disclosure may limit an upper limit of an amount of manganese (Mn) to 28%. A preferred upper limit of the amount of manganese (Mn) is 26%, and a more preferred upper limit of the amount of manganese (Mn) is 24%.

Chromium (Cr): 6.0% or less (including 0%)

Chromium (Cr) may be a ferrite stabilizing element, and may have an advantage of lowering an amount of an austenite stabilizing element, as chromium (Cr) is added. In addition, since chromium (Cr) may be a key component in generation of carbides such as MC or $M_{23}C_6$, a higher level of precipitation hardening may be obtained, when a certain amount or more of chromium (Cr) is added. In addition, since chromium (Cr) may be a strong anti-oxidation component, corrosion resistance of steel may be effectively improved when a certain level of chromium (Cr) is added. An austenite-based steel sheet of the present disclosure may include chromium (Cr) to achieve the above effects. A preferred lower limit of an amount of chromium (Cr) is 0.5%, and a more preferred lower limit of the amount of chromium (Cr) is 1.0%. When chromium (Cr) is excessively added, a coarse grain boundary carbide may be formed, resulting in a decrease in wear resistance, and thus, an upper limit of the amount of chromium (Cr) of the austenite-based steel sheet of the present disclosure may be limited to 6.0%. A preferred upper limit of the amount of chromium (Cr) is 5.0%, and a more preferred upper limit of the amount of chromium (Cr) is 4.0%.

Vanadium (V): 0.5% or less (including 0%)

Vanadium (V) may be a component that effectively contributes to improving strength of steel by forming fine precipitates. An austenite-based steel sheet of the present disclosure may include vanadium (V) to achieve the above effects. A preferable amount of vanadium (V) is 0.05% or more, and a more preferable amount of vanadium (V) is 0.1% or more. Since vanadium (V) is an expensive element that not only acts as a factor in increasing production costs when added in large amounts, but also saturates an effect thereof when added in amounts above a certain level, so the austenite-based steel sheet of the present disclosure may limit an upper limit of an amount of vanadium (V) to 0.5%. A preferred upper limit of the amount of vanadium (V) is 0.45%, and a more preferred upper limit of the amount of vanadium (V) is 0.4%.

Phosphorus (P): 0.025% or less (including 0%)

Phosphorus (P) may be an impurity that is inevitably introduced during a steel manufacturing process, and may be a component that has a high possibility of causing secondary segregation. Therefore, it is preferable to suppress an amount of addition as much as possible. Theoretically, a most preferable amount of phosphorus (P) is 0%, but controlling an amount of phosphorus (P) added to 0% causes an excessive process load, and in the present disclosure, an upper limit is limited to 0.025% in consideration of the amount of phosphorus (P) to be inevitably added.

Sulfur (S): 0.025% or less (including 0%)

Sulfur (S) may be also an impurity that is inevitably introduced during a steel manufacturing process, and may be a component that promotes high-temperature cracks during welding. Therefore, it is preferable to suppress an amount of addition as much as possible. Theoretically, a most preferable amount of sulfur (S) is 0%, but controlling an amount of sulfur (S) added to 0% causes an excessive process load, and in the present disclosure, an upper limit is limited to 0.025% in consideration of the amount of sulfur (S) to be inevitably added.

An austenite-based steel sheet according to an aspect of the present disclosure may include other Fe and other inevitable impurities in addition to the above-described components. In a typical manufacturing process, unintended impurities from raw materials or surrounding environment may be inevitably mixed, and thus this may not be entirely excluded. Since all of these impurities may be known to anyone skilled in the art, all of the contents may not be specifically mentioned in the present specification. In addition, additional components effective in addition to the above-described components may not be entirely excluded.

An austenite-based steel sheet according to an aspect of the present disclosure may include austenite as a matrix structure. A fraction of the austenite may be 80% by area or more, and a case in which the fraction of the austenite is 90% by area or more may be included. An average grain size of the austenite may be 60 um or less. An austenite-based steel sheet according to an aspect of the present disclosure not only may include austenite as a matrix structure, but also limits an average grain size of the austenite to a certain level or less, thereby effectively securing desired wear resistance, strength, and low-temperature toughness. The present disclosure may not entirely exclude formation of other tissues inevitably formed in addition to the austenite, and other residual tissues including precipitates such as carbides or the like may be included in a range of 20% by area or less.

An austenite-based steel sheet according to an aspect of the present disclosure may include a twin of 20% by area or less, and an average size of the twin may be 400 nm or less. When a certain fraction of the twin is included, wear resistance may be effectively improved through twin-induced hardening and tissue refinement by recrystallization. When a fraction of the twin reaches a certain range, the effects may be saturated, and thus the present disclosure may limit the fraction of the twin to a range of 20% by area or less. As an average size of the twin increases, an orientation disorder of a texture increases, and thus the average size of the twin may be limited to 400 nm or less.

Surface hardness (Hv) of an austenite-based steel sheet according to an aspect of the present disclosure may satisfy the following relational expression 2, and may effectively secure thus wear resistance and formability:

18.7*[Mn] - 10.3*[Cr] + 1.7*[C] ≤ Surface Hardness (Hv) ≤ 22.1*[Mn] + 18.3*[Cr] + 2.4*[C]     [Relational expression 2]

In the above Relational expression 1, [Mn], [Cr], and [C] are amounts (% by weight) of Mn, Cr, and C, included in the steel sheet, respectively, and, when a component thereamong is not included, brackets including the component are substituted with zero (0).

An austenite-based steel sheet according to an aspect of the present disclosure may have a tensile strength of 800 MPa or more, and a temperature at which a shear area of a DWTT test is 85% or more may be -25°C or less.

Hereinafter, a process for manufacturing an austenite-based steel sheet according to the present disclosure will be described in more detail.

A method for manufacturing an austenite-based steel sheet according to an aspect of the present disclosure may include heating a slab including, by weight, C: 0.4 to 1.2%, Si: 1.0% or less (including 0%), Mn: 10 to 28%, Cr: 6.0% or less (including 0%), V: 0.5% or less (including 0%), P: 0.025% or less, S: 0.025% or less, a balance of Fe, and inevitable impurities, for 180 to 320 minutes at a temperature range of 1100 to 1250°C; hot-rolling the heated slab at a finish rolling temperature of 800°C or more to provide a hot-rolled material; and cooling the hot-rolled material to room temperature at a cooling rate of 15°C/s or more to provide a final material.

Slab Heating

Since the slab provided in the manufacturing method of the present disclosure corresponds to a steel composition of the austenite-based steel sheet described above, description of a steel composition of the slab may be replaced by description of the steel composition of the austenite-based steel sheet described above.

The slab provided with the above-described steel composition may be heated in a temperature range of 1100 to 1250°C. When the heating temperature is less than a certain range, a problem of applying an excessive rolling load during hot-rolling may occur, or a problem of not sufficiently dissolving an alloy component may occur. Therefore, a lower limit of the slab heating temperature is limited to 1100°C. When the heating temperature exceeds a certain range, a crystal grain may grow excessively and strength may decrease, or a hot-rolling property may deteriorate in excess of a solidus line temperature of the steel. Therefore, an upper limit of the slab heating temperature is limited to 1250°C.

Hot-Rolling

The hot-rolling process may include a coarse rolling process and a finish rolling process, and the heated slab may be hot-rolled to be provided as a hot-rolled material. In this case, it may be performed in a temperature range of 800°C or more in finish hot-rolling. When a finish hot-rolling temperature is excessively low, the finish hot-rolling temperature is limited to a range of 800°C or more because there may be a concern about an excessive rolling load. In addition, an upper limit of the finish hot-rolling temperature is not particularly limited, but the upper limit may be limited to 950°C to prevent excessive growth of crystal grains. A thickness of the hot-rolled material completed is not particularly limited, but as a non-limiting example, the thickness of the hot-rolled material may satisfy a range of 6 to 30 mm.

Cooling

The hot-rolled material may be cooled to room temperature at a cooling rate of 15°C/s or more. When the cooling rate is less than a certain range, ductility of the steel material may be reduced due to a carbide deposited on a grain boundary during cooling, and thus deterioration of wear resistance may be problematic, and thus the cooling rate of the hot-rolled material is limited to a range of 15°C/s or more. The faster the cooling rate, the more advantageous it is to suppress carbide precipitation, but in a typical cooling rate exceeding 100°C/s may be difficult to implement due to characteristics of a facility, and thus an upper limit of the cooling rate is limited to 100°C/s. The cooling method is not particularly limited, but accelerated cooling may be applied.

An austenite-based steel sheet manufactured by the above-described manufacturing method may include austenite having an average grain size of 60 um or less in 80% by area or more, and a twin having an average grain size of 400 nm or less in 20% by volume or less.

In addition, the austenite-based steel sheet manufactured by the above-described manufacturing method may have a tensile strength of 800 MPa or more, and a temperature at which a shear area of a DWTT test is 85% or more may be -25°C or less, and surface hardness (Hv) may satisfy the following relational expression 2:

18.7*[Mn] - 10.3*[Cr] + 1.7*[C] ≤ Surface Hardness (Hv) ≤ 22.1*[Mn] + 18.3*[Cr] + 2.4*[C]

[Relational expression 2]

In the above Relational expression 2, [Mn], [Cr], and [C] are amounts (% by weight) of Mn, Cr, and C, included in the steel sheet, respectively, and, when a component thereamong is not included, brackets including the component are substituted with zero (0).

Hereinafter, a method for manufacturing a welded steel pipe for delivering a slurry, according to an aspect of the present disclosure, will be described in more detail.

According to an aspect of the present disclosure, a method for manufacturing a welded steel pipe for delivering a slurry may include molding an austenite-based steel sheet to have a tubular shape, to form a butted portion; and welding the butted portion to provide the welded steel pipe such that a carbon amount of a deposited portion satisfies the following relational expression 1:

```
[Relational expression 1]

0.03*[Mn] + 0.04*[Cr] ≤ [C] ≤ 0.05*[Mn] + 0.26*[Cr]
```

where, [C], [Mn], and [Cr] are amounts (% by weight) of C, Mn, and Cr, included in the deposited portion, respectively.

Molding

The above-described austenite-based steel sheet may be prepared and molded to have a tubular shape. In the present disclosure, a process of molding the austenite-based steel sheet to have a tubular shape is not particularly limited. A molding process commonly applied when manufacturing a welded steel pipe may be applied, and any one molding process selected from a spiral molding process, a UOE press process, a roll bending process, and a JCO molding process may be applied.

In addition, before forming the austenite-based steel sheet to have a tubular shape, an additional operation of improving processing of both ends forming a butted portion may be further included.

Welding

After molding the austenite-based steel sheet to have a tubular shape, the welded steel pipe may be provided by welding the butted portion. The welding process applied in the present disclosure is not particularly limited, and any welding process generally applied when manufacturing the welded steel pipe may be applied without limitation. It may be interpreted that at least one arc welding process selected from a shield metal arc welding (SMAW) process, a gas metal arc welding (GMAW) process, a gas tungsten arc welding (GTAW) process, a flux cored arc welding (FCAW) process, and a sub-merged arc welding (SAW) process, or an electric resistance welding (ERW) process may be applied, and one or more selected from thereamong may be selectively combined and applied to welding.

The inventor of the present disclosure confirmed that amounts of carbon (C), manganese (Mn), and chromium (Cr) in the deposited portion are factors that have a major influence on strength and low-temperature toughness of the welded portion, to derive the following relational expression 1:

```
[Relational expression 1]

0.03*[Mn] + 0.04*[Cr] ≤ [C] ≤ 0.05*[Mn] + 0.26*[Cr]
```

where, [C], [Mn], and [Cr] are amounts (% by weight) of C, Mn, and Cr, included in the deposited portion, respectively.

The present disclosure may adjust welding conditions and amounts of welding materials to be mixed such that the welded portion satisfies the following relational expression 1, thereby effectively improving strength and low-temperature toughness of the welded portion.

In addition, the inventor of the present disclosure confirmed that a welding heat input amount applied during welding is a factor that has a major influence on whether or not high-temperature cracks are generated in the welded portion, when welding is performed using a steel sheet that satisfies a component system limited by the present disclosure, and derived the present disclosure. That is, in a method for manufacturing a welded steel pipe according to an aspect of the present disclosure, a welding heat input amount applied during welding of an austenite-based steel sheet may be controlled to be within a range of 4.3 kJ/mm or less, such that high-temperature cracks generated in the welding line may be effectively suppressed. A preferred welding heat input amount is 4.2 kJ/mm or less, and a more preferred welding heat input amount is 4.1 kJ/mm or less.

Hereinafter, a welded steel pipe for delivering a slurry, according to an aspect of the present disclosure, will be described in more detail.

An austenite-based welded steel pipe according to an aspect of the present disclosure may include a welded steel pipe base material portion in which austenite is a base structure, and a welded portion connecting both ends of the welded steel pipe base material portion to each other, wherein a carbon amount of a deposited portion included in the welded portion satisfies the following relational expression 1:

[Relational expression 1]

$$0.03*[Mn] + 0.04*[Cr] \leq [C] \leq 0.05*[Mn] + 0.26*[Cr]$$

where, [C], [Mn], and [Cr] are amounts (% by weight) of C, Mn, and Cr, included in the deposited portion, respectively.

Since the welded steel pipe base material of the present disclosure has a steel composition and a microstructure corresponding to the austenite-based steel sheet described above, a temperature at which a tensile strength is 800 MPa or more and a shear area of a DWTT test is 85% or more may be -25°C or less.

The deposited portion included in the welded portion of the present disclosure may satisfy the above relational expression 1, and may secure superior strength of the welded portion and low-temperature toughness. In addition, since the welded portion of the present disclosure may be formed by applying a heat input amount of 4.3 kJ/mm or less, it may be possible to suppress occurrence of high-temperature cracks in the welded portion as much as possible. That is, formation of high-temperature cracks on a melting line may be suppressed as possible, and even when high-temperature cracks occur, a maximum crack length of the high-temperature cracks may be suppressed to a level of 0.5 mm or less.

Therefore, a welded steel pipe for delivering a slurry according to an aspect of the present disclosure not only has superior wear resistance and low-temperature toughness, but also minimizes formation of high-temperature cracks in a welded portion, to provide particularly suitable physical properties for delivering the slurry.

Hereinafter, a welded steel pipe for delivering a slurry and a method for manufacturing the same, according to an aspect of the present disclosure, will be described in more detail with reference to specific embodiments. The following embodiments may be for understanding the present disclosure, and may not be intended to specify the scope of the present disclosure. The scope of the present disclosure may be determined by matters described in the claims and matters able to be reasonably inferred therefrom.

Mode for Invention

(Example 1)

After preparing a slab having an alloy component described in Table 1 below, each specimen was prepared by applying the above-described process conditions.

[Table 1]

| Steel | Alloy Component (wt%) | | | | | | |
|---|---|---|---|---|---|---|---|
| | C | Si | Mn | Cr | V | P | S |
| A | 1.0 | 0.2 | 19 | 2.5 | - | 0.001 | 0.0007 |
| B | 1.3 | 0.2 | 20 | 1 | 0.1 | 0.001 | 0.0007 |
| C | 0.6 | 0.2 | 15 | 5 | 0.1 | 0.001 | 0.0007 |

[Table 2]

| Specimen No. | Steel | Slab Heating | | Hot-Roll | Cooling | |
| --- | --- | --- | --- | --- | --- | --- |
| | | Heating Temp. (°C) | Heating Time (min) | Finish Roll Temp. (°C) | Cooling Rate (°C/s) | Cooling End Temp. (°C) |
| 1 | A | 1250 | 90 | 850 | 50 | 500 |
| 2 | B | 1200 | 100 | 850 | 50 | 500 |
| 3 | C | 1100 | 100 | 850 | 50 | 500 |

After cutting each specimen, a mirror surface was prepared, and was corroded using a 2 vol% nital etching solution, a microstructure was observed using an optical microscope and an electron scanning microscope, and results therefrom were shown in Table 3. Tensile tests were performed on each specimen using a tensile tester, and results therefrom were shown in Table 3. A shear area was measured after fracturing the specimen using a DWTT tester while lowering a temperature using liquid nitrogen, and a DWTT temperature was measured based on a shear area of 85%, and were shown in Table 3.

[Table 3]

| Specimen No. | Steel | Microstructure | | | | Tensile Strength (MPa) | 85% Shear Area, DWTT Temp. (°C) |
| --- | --- | --- | --- | --- | --- | --- | --- |
| | | Y Fraction (area%) | Y Average Grain Size (μm) | Twin Fraction (area%) | Twin Average Size (nm) | | |
| 1 | A | 90 | 25 | 18 | 310 | 870 | -100 |
| 2 | B | 92 | 23 | 14 | 350 | 950 | -100 |
| 3 | C | 85 | 20 | 10 | 300 | 810 | -100 |

As shown in Tables 1 to 3, it can be confirmed that specimen 1 to 3 satisfy an alloy composition and microstructure conditions of the present disclosure and have excellent strength and low-temperature properties.

(Example 2)

After welding was performed on the specimen of inventive steel 1 under the following welding conditions, occurrence of high-temperature cracks in a welded portion was evaluated using the optical microscope.

A welding test piece 1 was prepared by performing sub-merged arc welding (SAW) with a heat input amount of 4.4 kJ/mm using 790A*38V, and a high-temperature crack with a maximum crack length exceeding 0.5mm was confirmed in a welded portion of the welding test piece 1. A welding test piece 2 was prepared by performing sub-merged arc welding (SAW) with a heat input amount of 3.5kJ/mm using 650A*35V, and high-temperature cracks with a maximum crack length exceeding 0.5mm were not found in a welded portion of the welding test piece 2. Therefore, it can be seen that, in a welded steel pipe according to an aspect of the present disclosure, occurrence of cracks in a welded portion was effectively suppressed.

Although the present disclosure has been described in detail through embodiments above, other types of embodiments are possible. Therefore, the technical idea and scope of the claims described below are not limited to embodiments.

**Claims**

1. A method for manufacturing a welded steel pipe for delivering a slurry, comprising:

    molding an austenite-based steel sheet to have a tubular shape, to form a butted portion; and
    welding the butted portion to provide the welded steel pipe such that a carbon amount of a deposited portion satisfies the following relational expression 1:

[Relational expression 1]

$$0.03*[Mn] + 0.04*[Cr] \leq [C] \leq 0.05*[Mn] + 0.26*[Cr]$$

where, [C], [Mn], and [Cr] are amounts (% by weight) of C, Mn, and Cr, included in the deposited portion, respectively.

2. The method of claim 1, wherein the austenite-based steel sheet comprises, by weight, C: 0.4 to 1.2%, Si: 1.0% or less (including 0%), Mn: 10 to 28%, Cr: 6.0% or less (including 0%), V: 0.5% or less (including 0%), P: 0.025% or less, S: 0.025% or less, a balance of Fe, and inevitable impurities,
wherein surface hardness of the austenite-based steel sheet satisfies the following relational expression 2:

[Relational expression 2]

$$18.7*[Mn] - 10.3*[Cr] + 1.7*[C] \leq \text{Surface Hardness (Hv)} \leq$$

$$22.1*[Mn] + 18.3*[Cr] + 2.4*[C]$$

where, [Mn], [Cr], and [C] are amounts (% by weight) of Mn, Cr, and C, included in the steel sheet, respectively, and, when a component thereamong is not included, brackets including the component are substituted with zero (0).

3. The method of claim 1, wherein the austenite-based steel sheet comprises austenite having 80% by area or more as a microstructure, and
wherein an average grain size of the austenite is 60 $\mu$m or less.

4. The method of claim 1, wherein the austenite-based steel sheet comprises a twin having 20% by area or less, and
wherein an average size of the twin is 400 nm or less.

5. The method of claim 1, wherein the molding an austenite-based steel sheet is performed by one selected from a spiral molding process, a UOE press process, a roll bending process, and a JCO molding process.

6. The method of claim 1, wherein the welding the butted portion is performed by at least one arc welding process selected from a shield metal arc welding (SMAW) process, a gas metal arc welding (GMAW) process, a gas tungsten arc welding (GTAW) process, a flux cored arc welding (FCAW) process, and a sub-merged arc welding (SAW) process, or
an electric resistance welding (ERW) process.

7. The method of claim 1, wherein the butted portion is welded with a heat input amount of 4.3kJ/mm or less.

8. A welded steel pipe for delivering a slurry, comprising:

a welded steel pipe base material portion in which austenite is a base structure; and
a welded portion connecting both ends of the welded steel pipe base material portion to each other,
wherein a carbon amount of a deposited portion included in the welded portion satisfies the following relational expression 1:

[Relational expression 1]

$$0.03*[Mn] + 0.04*[Cr] \leq [C] \leq 0.05*[Mn] + 0.26*[Cr]$$

where, [C], [Mn], and [Cr] are amounts (% by weight) of C, Mn, and Cr, included in the deposited portion, respectively.

9. The welded steel pipe of claim 8, wherein the welded steel pipe base material portion comprises, by weight, C: 0.4 to 1.2%, Si: 1.0% or less (including 0%), Mn: 10 to 28%, Cr: 6.0% or less (including 0%), V: 0.5% or less (including 0%), P: 0.025% or less, S: 0.025% or less, a balance of Fe, and inevitable impurities,

wherein surface hardness of the steel sheet satisfies the following relational expression 2:

```
[Relational expression 2]

18.7*[Mn] - 10.3*[Cr] + 1.7*[C] ≤ Surface Hardness (Hv) ≤ 22.1*[Mn] + 18.3*[Cr] + 2.4*[C]
```

where, [Mn], [Cr], and [C] are amounts (% by weight) of Mn, Cr, and C, included in the steel sheet, respectively, and, when a component thereamong is not included, brackets including the component are substituted with zero (0).

10. The welded steel pipe of claim 8, wherein the welded steel pipe base material portion comprises austenite having 80% by area or more as a microstructure, and
wherein an average grain size of the austenite is 60 μm or less.

11. The welded steel pipe of claim 8, wherein the welded steel pipe base material portion comprises a twin of 20% by area or less, and
wherein an average size of the twin is 400 nm or less.

12. The welded steel pipe of claim 8, wherein a maximum crack length of a high-temperature crack, formed in the welded portion, is 0.5 mm or less.

13. The welded steel pipe of claim 8, wherein, in the welded steel pipe base material portion,

a tensile strength is 800 MPa or more, and
a temperature at which a shear area of a DWTT test is 85% or more is -25°C or less.

FIG. 1

FIG. 2

## INTERNATIONAL SEARCH REPORT

| International application No. |
|---|
| **PCT/KR2022/020919** |

### A. CLASSIFICATION OF SUBJECT MATTER

**B23K 9/16**(2006.01)i; **B23K 9/18**(2006.01)i; **B23K 11/00**(2006.01)i; **B23K 35/30**(2006.01)i; B23K 101/04(2006.01)n

According to International Patent Classification (IPC) or to both national classification and IPC

### B. FIELDS SEARCHED

Minimum documentation searched (classification system followed by classification symbols)

B23K 9/16(2006.01); B21C 37/08(2006.01); B23K 9/025(2006.01); C21D 8/02(2006.01); C22C 38/00(2006.01); C22C 38/04(2006.01); C22C 38/38(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 내마모성(wear resistance), 오스테나이트(austenite), 용접강관(welded steel pipe), 고망간(high manganese), 입열량(heat input), 슬러리(slurry), 결정립(grain), 쌍정(twin), 균열(crack)

### C. DOCUMENTS CONSIDERED TO BE RELEVANT

| Category* | Citation of document, with indication, where appropriate, of the relevant passages | Relevant to claim No. |
|---|---|---|
| X | KR 10-2019-0050926 A (POSCO) 14 May 2019 (2019-05-14)<br>See paragraphs [0026], [0033], [0041], [0046] and [0057], claim 1 and table 1. | 1,5-8,12 |
| Y | | 2-4,9-11,13 |
| Y | KR 10-2290780 B1 (POSCO) 20 August 2021 (2021-08-20)<br>See paragraph [0069] and claim 8. | 2-4,9-11,13 |
| A | EP 3778950 A1 (NIPPON STEEL CORPORATION) 17 February 2021 (2021-02-17)<br>See paragraphs [0060]-[0065] and claim 1. | 1-13 |
| A | KR 10-2016-0078578 A (POSCO) 05 July 2016 (2016-07-05)<br>See paragraphs [0084]-[0086], claims 1-2 and 4-5 and tables 1 and 2. | 1-13 |
| A | JP 09-241808 A (KURIMOTO LTD.) 16 September 1997 (1997-09-16)<br>See paragraphs [0024] and [0029]-[0030] and claim 1. | 1-13 |

☐ Further documents are listed in the continuation of Box C.　　☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **27 March 2023** | **29 March 2023** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
Information on patent family members

International application No.

**PCT/KR2022/020919**

| Patent document cited in search report | | | Publication date (day/month/year) | Patent family member(s) | | | Publication date (day/month/year) |
|---|---|---|---|---|---|---|---|
| KR | 10-2019-0050926 | A | 14 May 2019 | None | | | |
| KR | 10-2290780 | B1 | 20 August 2021 | EP | 3872215 | A1 | 01 September 2021 |
| | | | | EP | 3872215 | A4 | 01 September 2021 |
| | | | | KR | 10-2020-0047319 | A | 07 May 2020 |
| | | | | KR | 10-2021-0102146 | A | 19 August 2021 |
| | | | | KR | 10-2389019 | B1 | 22 April 2022 |
| | | | | WO | 2020-085852 | A1 | 30 April 2020 |
| EP | 3778950 | A1 | 17 February 2021 | BR | 112020014123 | A2 | 01 December 2020 |
| | | | | CN | 111727267 | A | 29 September 2020 |
| | | | | CN | 111727267 | B | 24 May 2022 |
| | | | | EP | 3778950 | A4 | 06 October 2021 |
| | | | | KR | 10-2020-0105925 | A | 09 September 2020 |
| | | | | KR | 10-2453321 | B1 | 11 October 2022 |
| | | | | WO | 2019-186911 | A1 | 03 October 2019 |
| KR | 10-2016-0078578 | A | 05 July 2016 | KR | 10-1665809 | B1 | 13 October 2016 |
| JP | 09-241808 | A | 16 September 1997 | JP | 3070658 | B2 | 31 July 2000 |

Form PCT/ISA/210 (patent family annex) (July 2022)